# EUROPEAN PATENT APPLICATION

(11) **EP 4 726 224 A1**
(43) Date of publication of application: **15.04.2026**
(21) Application number: 24205709.9
(22) Date of filing: 09.10.2024
(51) Int. Cl.: F16B 37/00

(54) **METHOD FOR MANUFACTURING A HOLLOW FASTENER WITH CLOSED END AND HOLLOW FASTENER**

(71) Applicant: Newfrey LLC, New Britain, CT 06053 (US)
(72) Inventor: DREXLER, Frank, 35394 Gießen (DE)
(74) Representative: SBD IPAdmin

(57) **Abstract**

Fastener (10) and method for manufacturing a closed end hollow fastener comprising the steps of:
- providing a metal body (12) with a shank (16) comprising a first end (18) and a second end (20) and having a through hole that extends from the first end to the second end, and a radial enlargement portion forming a body head (22) at the first end of the shank;
- coating the body using a rack plating system, such that the inner wall of the shank defining the through hole is completely coated from the first to the second end;
- providing a sealing plug (14);
- fixing the sealing plug (14) to the second end of the shank (16).

## Description

The present invention relates to a method for manufacturing a hollow closed end fastener and a hollow closed end fastener. More particularly, the present invention is directed to a method allowing an entire coating of the internal part of a fastener having a hollow shank with a closed end. The invention concerns fasteners having a metal body, such as nuts, blind rivet nuts or metal inserts or the like. More particularly, the invention concerns fastener having a body made of heavy metal (heavy-duty or high-strength metals) such as stainless steel, carbon steel, alloy steel, or titanium.

Heavy metal fasteners are commonly used in industries such as construction, automotive, aerospace, and manufacturing, where strong and reliable connections are essential. They are often used in structural applications, machinery assembly, equipment installation, and other situations where the fasteners need to withstand significant forces or stress.

Such metal fasteners are commonly coated, notably to avoid corrosion. In order not to damage an external thread of such fasteners, a surface finishing process is also often required. It is common to use a rack plating process for the coating of such elements. With the conventional rack plating process used, the internal area of the closed end hollow body of the current fasteners cannot be fully coated. For instance, currently for a M20 closed end hollow fastener having a M12 internal thread and an internal blind hole longitudinally extending over a length of about 40 mm or more, the coating occurs on the internal area only over a length of 12 mm, leaving the rest of the surface defining the blind hole uncoated. This leads to potential corrosion and rust formation, an uneven distribution of forces and stress concentration within the fastener, causing premature wear, fatigue, and ultimately, failure of the fastener under load or during use. Furthermore an incompletely coated internal area may make it more challenging to achieve a secure and reliable connection. The lack of coating can create friction and resistance during assembly, potentially leading to difficulties in tightening or loosening the fastener. This can impact the overall performance and functionality of the assembly or equipment where the fastener is used.

To this aim, according to the invention, it is provided a method for manufacturing a hollow fastener with a closed end comprising the steps of:
- providing a metal body with a shank comprising a first end and a second end and having a through hole that extends from the first end to the second end, and a radial enlargement portion forming a body head at the first end of the shank;
- coating the body using a rack plating system, such that the inner wall of the shank defining the through hole is completely coated from the first to the second end;
- providing a sealing plug;
- fixing the sealing plug to the second end of the shank.

The internal area of the metal body having a through hole can be completely coated with a rack plating system. The rack plating setup can hold the metal body securely in place during the plating process. The rack is designed in a way that allows the plating solution to flow through the hollow metal body (and through hole), ensuring complete coverage of the internal surfaces (and the external surfaces). The sealing plug is fixed to the second end of the shank such that the metal body with the sealing plug becomes a complete hollow fastener with a closed end (in other words, the sealing plug closes the through hole on one side after the coating has been completed). The sealing plug forms an end cap.

In an embodiment, the shank is provided with an internal thread. The internal thread is thus completely coated during the rack plating coating step. In an embodiment, the sealing plug is screwed to the body. This allows a secured and easy fixation of the sealing plug to the metal body.

In an embodiment, the internal thread extends up to the second end and is entirely coated.

In an embodiment, the sealing plug is made of a plastic material. Using a plastic end cap offers advantages such as protection, insulation, safety, and cost-effectiveness.

In an embodiment, the coating is a galvanic coating. The galvanic coating forms a barrier between the metal body and the surrounding environment, preventing direct contact between the metal and corrosive agents.

In an embodiment, the sealing plug is provided with a sealing lip and is sealingly fixed to the second end of the shank. The end of the shank is thus sealingly closed.

In an embodiment, the outer surface of the metal body is provided with an external thread. The external thread of the fastener is not damaged by the rack process.

The present invention is also directed to a hollow fastener with closed end, notably a fastener manufactured according to the method disclosed above, wherein the fastener comprises:
- a metal body with a shank comprising a first end and a second end and having a through hole that extends from the first end to the second end, and a radial enlargement portion forming a body head at the first end of the shank, wherein the metal body is entirely coated such that the coating extends on the entire inner wall of the shank defining the through hole;
- a sealing plug,
wherein the sealing plug is sealingly fixed at the second end of the shank.

Such hollow fastener with closed end behaves similarly to those made of solid material (or integral hollow fastener with closed end), with the sealing plug forming an end cap and with a complete coating of the internal area.

In an embodiment, the through hole is provided with an internal thread and the internal thread is entirely coated.

In an embodiment, the sealing plug is provided with a sealing lip. The sealing lip increases the sealing performance of the plug.

In an embodiment, the sealing plug is screwed to the second end of the hollow shank. The sealing plug is easily fixed to the metal body to form the closed end hollow fastener.

In an embodiment, the sealing plug is made of plastic material. Using a plastic end cap offers advantages such as protection, insulation, safety, and cost-effectiveness.

In an embodiment, the metal body comprises an outer threaded portion. The outer threaded portion provides secure attachment, adjustability, load distribution, antivibration properties, compatibility, and ease of installation.

In an embodiment, the shank extends longitudinally along a longitudinal axis over a length which is greater than 20 millimeters, and particularly over a length which is greater than 40 millimeters. In an embodiment, the shank has a given external diameter which is greater than 15 mm, and smaller than 25 mm.

Other characteristics and advantages of the invention will readily appear from the following description of embodiments, provided as non-limitative examples, in reference to the accompanying drawings.

In the drawings:
Fig. 1 is a schematic cross-section view of a closed end hollow fastener according to the prior art;
Fig. 2 is a cross-section view of a metal body of a closed end hollow fastener according to the invention;
Fig. 3 is a perspective and section view of a sealing plug adapted to cooperate with the metal body of Fig. 2 to form a closed end hollow fastener according to the invention;
Fig. 4 is a schematical cross-section view of a closed end hollow fastener comprising a body and a plug according to the invention;
Fig. 5 is a flowchart illustrating a sequence of steps of a method for manufacturing a hollow fastener with closed end according to the invention.

On the different figures, the same reference signs designate identical or similar elements.

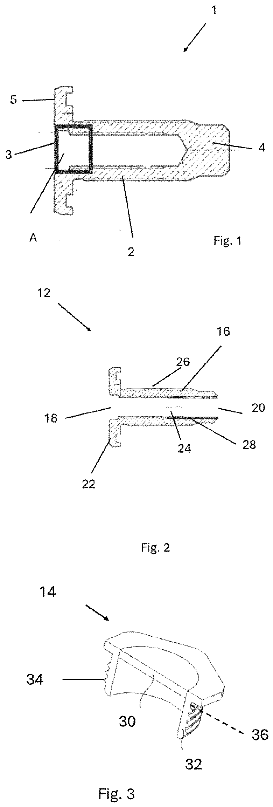

Fig. 1 shows a closed end hollow fastener 1 according to the prior art. The closed end hollow fastener 1 is integral and comprises a body with a hollow shank 2 comprising a first end 3 and a second end 4. A radial enlargement portion forms a body head 5 at the first end of the shank. The second end of the shank is a closed end. For instance, the fastener comprises an outer thread and an internal thread. The surfaces of such integral closed end fasteners 1 are normally treated by a galvanizing process using a rack plating system. However, the use of the rack plating system allows only for a small amount of the internal area A of the fastener to be coated.

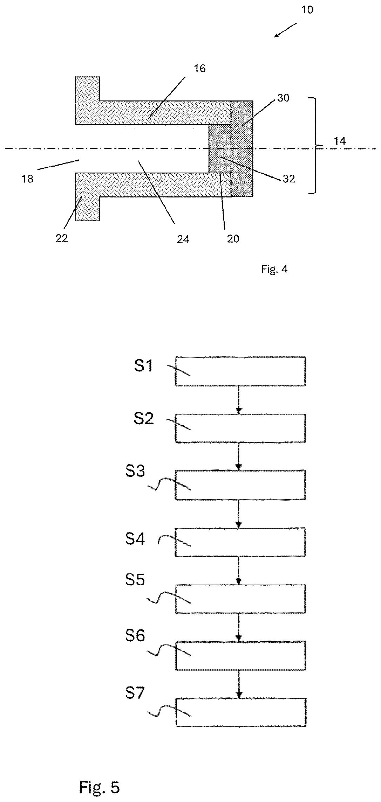

Fig. 4 schematically represents a closed end hollow fastener 10 according to the invention. The fastener 10 comprises a metal body 12 and a sealing plug 14.

The metal body 12, as depicted in Fig. 2, has a shank 16 comprising a first end 18 and a second end 20. A radial enlargement portion forms a body head 22 at the first end 18 of the shank 18. The metal body 12 comprises a through hole 24 that extends from the first end 18 of the shank 18 to the second end 20 of the shank 18. The shank is for instance cylindrical and has a given shank outer diameter, which can be constant or not, and a given inner diameter, which can also be constant or not. The shank longitudinally extends along a longitudinal axis over a length which is for instance greater than 20 millimeters, and more particularly greater than 40 millimeters. The metal body 12 is integral and made for instance in a heavy metal material, for example material such as stainless steel, carbon steel, alloy steel, or titanium can be used.

The metal body 12 comprises for instance an external thread portion 26 and an internal thread 28. The internal thread is provided on the internal wall defining the through hole. The internal thread 28 may extends from the first end up to the second end. In another embodiment, the internal thread extends up to the second end and a gap is provided between the first end and the internal thread.

For instance, in a particular embodiment, the external thread portion 26 is with an M20 size specification. The internal thread is with a M12 size specification. The shank longitudinally extends along a longitudinal axis over a length which is between 40 and 50 millimeters. The metal body 12 is coated using a rack plating system, such that the inner wall of the shank defining the through hole is completely coated from the first to the second end. The metal body 12 is coated by a galvanizing process, as described for instance below.

The metal body 12, once coated, is adapted to cooperate with the sealing plug 14. The sealing plug is configured to sealingly close the second end of the shank. The sealing plug is for instance depicted in Fig. 3. The sealing plug comprises a plug head 30 extending at a first end of a plug shank 32. The plug shank may be hollow (as shown in Fig. 3) or may be plain or solid, as schematically represented in Fig. 4. The plug shank comprises on its external surface a plug thread 34. The plug thread 34 cooperates with the internal thread 28 of the metal body on the second end 20 of the shank. For instance, the sealing plug comprises a sealing lip 36. The sealing plug is for instance made of plastic material.

The fastener 10 with the sealing plug and the metal body forms a two-parts closed end hollow fastener adapted to have an entirely coated internal area (or more particularly the internal thread) of the metal body.

The method for manufacturing a hollow closed end fastener 10 according to the invention is as follows.

In a first step S1 (see Fig. 5), the metal body 12 is provided.

In a second step S2, the metal body is cleaned and eventual dirt, grease, or oxide layers are removed from the metal body 12. This can be done for instance through a series of chemical cleaning processes, such as degreasing, pickling, and rinsing, to ensure a clean surface for plating.

In a third step S3, a galvanizing rack is prepared, for instance by attaching hooks, hangers, or other fixtures to hold the metal body or a plurality of metal bodies 12 securely. The rack is designed to accommodate the metal body and not damage a potential external thread, as well as fully coat the entire metal body from the first end to the second end on both internal and external surfaces.

In a fourth step S4, the prepared rack with the metal body or metal bodies is immersed into a galvanizing bath, which contains a solution of zinc or other plating metal. The bath is typically an electrolyte solution that facilitates the electroplating process. Due to the metal body having a through hole, the solution can easily flow between the first and the second ends.

In a fifth step S5, once the rack is submerged, an electric current is passed through the bath. This causes the metal ions from the solution to be attracted to the metal bodies 12 on the rack, forming a layer of the plating metal on their internal and external surfaces. The electric current ensures an even and controlled deposition of the plating metal.

In a sixth step (S6), after the desired plating thickness is achieved, the rack with the galvanized objects is removed from the bath and rinsed to remove any excess plating solution. The metal bodies 12 are then dried.

In a last step, the sealing plug is provided and fixed to the second end of the metal body to form a closed end hollow fastener 10.

The sealing plug 14 forms an end cap sealingly closing the second end of the shank.

It is contemplated that there are numerous modifications of the embodiments described herein, which are still within the scope of the disclosure as defined by the appended claims.
prior art integral fastener 1
hollow shank 2
first end 3
second end 4
body head 5
fastener 10
metal body 12
sealing plug 14
shank 16
first end 18
second end 20
body head 22
through hole 24
external thread portion 26
internal thread 28
plug head 30
plug shank 32
plug thread 34
sealing lip 36

## Claims

1. Method for manufacturing a hollow fastener (10) with closed end comprising the steps of:
- providing a metal body (12) with a shank (16) comprising a first end (18) and a second end (20) and having a through hole that extends from the first end to the second end, and a radial enlargement portion forming a body head (22) at the first end of the shank;
- coating the body using a rack plating system, such that the inner wall of the shank defining the through hole is completely coated from the first to the second end;
- providing a sealing plug (14);
- fixing the sealing plug (14) to the second end of the shank (16).

2. Method according to claim 1, wherein the shank (16) is provided with an internal thread (28), and wherein the sealing plug (14) is screwed to the metal body (12).

3. Method according to claim 2, wherein the internal thread (28) extends up to the second end and is entirely coated.

4. Method according to any of claims 1 to 3, wherein the sealing plug (14) is made of a plastic material.

5. Method according to any of claims 1 to 4, wherein the coating is a galvanic coating.

6. Method according to any of claims 1 to 5, wherein the sealing plug (14) is provided with a sealing lip (36) and is sealingly fixed to the second end of the shank (16).

7. Method according to any of claims 1 to 6, wherein the outer surface of the metal body (12) is provided with an external thread portion (26).

8. Fastener (10) comprising:
- a metal body (12) with a shank comprising a first end and a second end and having a through hole that extends from the first end to the second end, and a radial enlargement portion forming a body head at the first end of the shank, wherein the metal body is entirely coated such that the coating extends on the entire inner wall of the shank defining the through hole;
- a sealing plug (14),
wherein the sealing plug is sealingly fixed at the second end of the shank.

9. Fastener (10) according to claim 8, wherein the through hole is provided with an internal thread (28) and the internal thread is entirely coated.

10. Fastener (10) according to claim 8 or 9, wherein the sealing plug (14) is provided with a sealing lip (36).

11. Fastener (10) according to any of claims 8 to 10, wherein the sealing plug (14) is screwed to the second end of the shank (16).

12. Fastener (10) according to any of claims 8 to 11, wherein the sealing plug (14) is made of plastic material.

13. Fastener (10) according to any of claims 7 to 12, wherein the metal body (12) comprises an outer threaded portion (26).

14. Fastener (10) according to any of claims 7 to 12, wherein the shank (16) extends longitudinally along a longitudinal axis over a length which is greater than 20 millimeters, and particularly over a length which is greater than 40 millimeters.
